**Europäisches Patentamt**

**European Patent Office**

**Office européen des brevets**

(19)

(11) Veröffentlichungsnummer: **0 025 930**

**A2**

# (12) EUROPÄISCHE PATENTANMELDUNG

(21) Anmeldenummer: 80105365.3

(22) Anmeldetag: 08.09.80

(51) Int. Cl.³: **B 01 D 13/04**
**H 01 M 2/16**
**//C25B13/04**

(30) Priorität: 20.09.79 DE 2938123

(43) Veröffentlichungstag der Anmeldung:
01.04.81 Patentblatt 81/13

(84) Benannte Vertragsstaaten:
DE FR GB SE

(71) Anmelder: SIEMENS AKTIENGESELLSCHAFT Berlin
und München
Postfach 22 02 61
D-8000 München 22(DE)

(72) Erfinder: Höhne, Karl, Dr.
Reinigerstrasse 15
D-8520 Erlangen(DE)

(54) Diaphragmen für elektrochemische Zellen und deren Herstellung.

(57) Die Erfindung betrifft ein Verfahren zur Herstellung von Diaphragmen für elektrochemische Zellen aus faserförmigem Material und einem organischen Bindemittel und stellt sich die Aufgabe, ein derartiges Verfahren in der Weise auszugestalten, daß es die Herstellung von Diaphragmen erlaubt, die relativ dünn sind, gleichzeitig aber auch bei hohen Betriebstemperaturen auf Dauer eine ausreichende chemische und mechanische Stabilität besitzen. Erfindungsgemäß ist dazu vorgesehen, Kaliumtitanat zusammen mit Polytetrafluoräthylen und einem Styrol-Butadien-Copolymeren aus einer Suspension auf ein Netz mit einer Maschenweite etwa zwischen 0, 1 und 0,4 mm aufzubringen. Die nach dem erfindungsgemäßen Verfahren hergestellten Diaphragmen eignen sich insbesondere als Deckschichten in Brennstoffelementen mit alkalischem Elektrolyten.

EP 0 025 930 A2

SIEMENS AKTIENGESELLSCHAFT       Unser Zeichen
Berlin und München               VPA 79 P 7 5 5 3 EUR

Diaphragmen für elektrochemische Zellen und deren Herstellung

Die Erfindung betrifft ein Verfahren zur Herstellung von Diaphragmen für elektrochemische Zellen aus faserförmigem Material und einem organischen Bindemittel sowie nach einem derartigen Verfahren hergestellte Diaphragmen.

Diaphragmen für elektrochemische Zellen müssen neben einer ausreichenden Porosität und einer guten chemischen Widerstandsfähigkeit gegenüber den verwendeten Medien insbesondere auch eine hohe mechanische Stabilität aufweisen. Zur Verwendung in Brennstoffelementen sind deshalb beispielsweise hochreine Asbestfasern und Kunststoffe enthaltende Asbestmembranen bekannt, bei denen der Kunststoff ein Bindemittel aus Methacrylsäureester, Polysulfonen, chlorsulfoniertem Polyäthylen oder Chloropren in Mengen von 0,5 bis 6 Gew.-%, insbesondere 1,5 bis 3 Gew.-%, bezogen auf das Gewicht der Asbestfasern, ist (DE-PS 15 96 241). Bei der Herstellung der Asbestmembranen wird dabei der Kunststoff den Asbestfasern in

Bh 2 Koe / 17.9.1979

Form einer wäßrigen Dispersion beigemischt.

Aus der DE-PS 16 71 902 ist ein Verfahren zur Herstellung einer gasdichten Membran hoher mechanischer Festigkeit aus faserförmigem Asbest- oder Kohlematerial und einem Kunststoffbindemittel für elektrochemische Zellen, insbesondere Brennstoffelemente, bekannt, bei dem beim Herstellen der Membran aus dem Fasermaterial diesem ein Butadien-Styrol-Acrylnitril-Copolymerisat mit einem Anteil des Copolymerisats von 6 bis 15 Gew.-%, bezogen auf das Fasermaterial, beigegeben wird und wobei nach der Bildung der Membran die Nitrilgruppen des Copolymerisats zu Carboxylgruppen verseift werden.

Die Anforderungen an die Diaphragmen bezüglich der chemischen und mechanischen Beständigkeit werden bei höheren Betriebstemperaturen, bedingt durch Sauerstoff und Elektrolytflüssigkeit, noch größer. Eine zusätzliche erschwerende Komponente ergibt sich durch die relativ hohen Betriebsgasdrücke.

Asbestdiaphragmen haben sich beispielsweise in $H_2/O_2$-Brennstoffelementen mit alkalischem Elektrolyten gut bewährt, bei Betriebstemperaturen über 80°C gibt das Asbestmaterial jedoch nennenswerte Mengen Silikate an die Elektrolytflüssigkeit ab, die die Aktivität des als Anodenkatalysator verwendeten Raney-Nickels erniedrigen. Darüber hinaus erleiden die Diaphragmen durch den Angriff der Elektrolytflüssigkeit eine Einbuße hinsichtlich der mechanischen Stabilität. Dies kann auch durch die Verwendung dicker Diaphragmen mit einem hohen Bindemittelgehalt, die im übrigen andere nachteilige Eigenschaften besitzen, nur zum Teil ausgeglichen werden.

Aufgabe der Erfindung ist es, ein Verfahren der eingangs genannten Art in der Weise auszugestalten, daß es die Herstellung von Diaphragmen für elektrochemische Zellen erlaubt, die relativ dünn sind, gleichzeitig aber auch bei hohen Betriebstemperaturen auf Dauer eine ausreichende chemische und mechanische Stabilität besitzen.

Dies wird erfindungsgemäß dadurch erreicht, daß Kaliumtitanat zusammen mit Polytetrafluoräthylen und einem Styrol-Butadien-Copolymeren aus einer Suspension auf ein Netz mit einer Maschenweite etwa zwischen 0,1 und 0,4 mm aufgebracht wird.

Mittels des erfindungsgemäßen Verfahrens können - unter Verwendung von Kaliumtitanat - in reproduzierbarer Weise dünne, gasdichte, chemisch und mechanisch stabile Diaphragmen hergestellt werden. Dabei ist es aber wesentlich, daß das Kaliumtitanat zusammen mit einem speziellen Bindemittel auf ein Netz mit einer bestimmten Maschenweite abgeschieden wird. Es hat sich nämlich gezeigt, daß sich aus Kaliumtitanat allein oder auch aus Kaliumtitanat und einem der gängigen Bindemittel, wie Polytetrafluoräthylen, keine gasdichten Diaphragmen herstellen lassen. Bei Kaliumtitanat, das laugebeständig ist, handelt es sich - in chemischer Hinsicht - im wesentlichen um $K_2Ti_6O_{13}$.

Bei einer Kaliumtitanatbelegung von 19 mg/cm$^2$ beträgt beispielsweise die Dicke eines nach dem erfindungsgemäßen Verfahren hergestellten Diaphragmas - einschließlich Stütznetz - lediglich 0,4 mm. Dabei ist die Kaliumtitanatschicht fest mit dem Netz verankert und sehr stabil: Selbst beim Knicken tritt keine Rißbildung auf. Im übrigen ist die Tatsache, daß sich aus Kaliumtitanat mechanisch derart stabile Diaphragmen herstellen lassen, ziemlich überraschend. Kaliumtitanat weist zwar, ebenso wie Asbest, eine Faserstruktur auf, im Gegensatz zu Asbest, der mehr fiederartig strukturiert ist, besteht das Kaliumtitanat aber aus glatten und sehr kurzen Nadeln.

Vorzugsweise wird beim erfindungsgemäßen Verfahren ein Netz mit einer Maschenweite von etwa 0,2 mm verwendet. Die verwendeten Netze bestehen aus laugebeständigem Material, vorzugsweise dienen dazu laugebeständige Kunststoffe und Metalle, insbesondere Nickel.

Die erfindungsgemäßen Diaphragmen weisen im allgemeinen einen Bindemittelgehalt etwa zwischen 10 und 30 Gew.-% auf, bezogen auf Kaliumtitanat; vorzugsweise beträgt der Gehalt an Bindemittel etwa zwischen 15 und 25 Gew.-%. Das Bindemittel selbst besteht vorteilhaft zu 30 bis 60 Gew.-% aus Polytetrafluoräthylen und zu 40 bis 70 Gew.-% aus dem Styrol-Butadien-Copolymeren; dabei ergänzen sich die beiden Komponenten zu 100 %. Die Belegungsdichte der erfindungsgemäßen Diaphragmen an Kaliumtitanat beträgt vorteilhaft etwa zwischen 10 und 30 mg/cm$^2$, vorzugsweise etwa zwischen 15 und 25 mg/cm$^2$.

Anhand von Beispielen soll die Erfindung noch näher erläutert werden.

Diaphragmen-Herstellung

2g Kaliumtitanat werden in 300 ml Wasser aufgerührt und mit 0,29 g einer 60 %igen wäßrigen Suspension von Polytetrafluoräthylen (PTFE) und 0,4 g einer 43,5 %igen wäßrigen Suspension eines Styrol-Butadien-Copolymeren (SB) versetzt. Die dabei erhaltene Suspension wird in eine Nutsche (Durchmesser: 11 cm) gegossen, auf deren Siebboden sich ein Filterpapier und darauf ein Nickelnetz mit einem Drahtdurchmesser von 0,125 mm und einer Maschenweite von 0,2 mm befindet. Nach dem Absaugen wird das Nickelnetz mitsamt dem Filterkuchen in einer Photopresse getrocknet. Das trockene Diaphragma wird anschließend noch bei 150°C mit einem Druck von 500 N/cm$^2$ gepreßt.

Bestimmung des sogenannten "bubble point"

Zur Bestimmung der Gasdichtigkeit der Diaphragmen wird ein mit einer Öffnung und einem Gaseinleitungsrohr versehener Hohlkörper verwendet, dessen Öffnung durch ein Diaphragma verschlossen wird. Das Diaphragma wird dabei nach außen durch eine Lochplatte abgestützt. Die gesamte Anordnung wird in ein mit Wasser gefülltes Becherglas getaucht und nach einer Verweilzeit von ca. 15 min wird dem Hohlkörper durch das Gaseinleitungsrohr Wasserstoff mit zunehmendem Druck solange zugeführt, bis am Diaphragma die ersten Gasblasen zu beobachten sind, d.h. ein Gasdurchtritt durch das Diaphragma erfolgt.

Die bei diesen Untersuchungen an Diaphragmen mit unterschiedlicher Belegungsdichte an Kaliumtitanat erhaltenen Ergebnisse sind in der nachfolgenden Tabelle zusammengefaßt.

| Kaliumtitanat [mg/cm$^2$] | PTFE [mg/cm$^2$] | SB [mg/cm$^2$] | "bubble point" [bar] |
|---|---|---|---|
| 27 | 2,1 | 2,3 | 4,1 |
| 22 | 1,8 | 1,9 | 4,0 |
| 18 | 1,4 | 1,6 | 2,2 |

Bestimmung der Permeabilität

Zur Bestimmung der Durchlässigkeit der Diaphragmen für Elektrolytflüssigkeit bzw. Wasser dient ebenfalls die beschriebene Anordnung. In diesem Fall wird dem Hohlkörper durch das Gaseinleitungsrohr Wasser unter Überdruck zugeführt. Der Überdruck wird dabei durch eine Wassersäule von 88,7 cm in einer Bürette erzeugt. Die Permeabilität wird anhand der durch das Diaphragma (Fläche: 12,6 cm$^2$) tretenden Wassermenge bestimmt. Bei diesen Untersuchungen ergibt sich die hohe Permeabilität von 400 cm$^3$/cm$^2 \cdot$h$\cdot$bar.

Bestimmung der elektrochemischen Eigenschaften

Die elektrochemischen Eigenschaften der erfindungsgemäßen Diaphragmen werden in einer Halbzelle mit fixierter Lugginkapillare getestet, wobei ein Hg/HgO-Element als Referenzelektrode dient. Als Elektrolytflüssigkeit wird 6 m KOH verwendet, die Betriebstemperatur beträgt 80°C. Die Diaphragmen dienen dabei als Deckschicht für Sauerstoffelektroden. Das Elektrodenmaterial für die Umsetzung des Sauerstoffes ist ein dotierter Silberkatalysator, der Betriebsgasdruck des Sauerstoffes beträgt 2 bar.

Bei den Untersuchungen ergab sich, daß der ohmsche Anteil des Widerstandes zwischen der Sauerstoffelektrode und der Lugginkapillare, der mit einem Milliohmmeter bestimmt wird, 250 m$\Omega$ beträgt. Beim Einsatz eines Asbestdiaphragmas ergibt sich ein Wert von 210 m$\Omega$. Die Widerstandserhöhung um 40 m$\Omega$ bei der Verwendung eines Kaliumtitanat-Diaphragmas dürfte im wesentlichen dem Spannungsabfall an dessen Stütznetz zuzuschreiben sein. Beim Vergleich der Potentiale der Sauerstoffelektrode zeigt sich, daß die IR-korrigierten Werte bei Kaliumtitanat- und Asbestdiaphragmen nahezu identisch sind.

6 Patentansprüche

Patentansprüche

1. Verfahren zur Herstellung von Diaphragmen für elektrochemische Zellen aus faserförmigem Material und einem organischen Bindemittel, d a d u r c h   g e k e n n - z e i c h n e t ,   daß Kaliumtitanat zusammen mit Polytetrafluoräthylen und einem Styrol-Butadien-Copolymeren aus einer Suspension auf ein Netz mit einer Maschenweite etwa zwischen 0,1 und 0,4 mm aufgebracht wird.

2. Verfahren nach Anspruch 1,   d a d u r c h g e k e n n z e i c h n e t ,   daß ein Netz mit einer Maschenweite von etwa 0,2 mm verwendet wird.

3. Verfahren nach Anspruch 1 oder 2,   d a d u r c h g e k e n n z e i c h n e t ,   daß ein Netz aus laugebeständigem Kunststoff oder Metall, insbesondere Nickel, verwendet wird.

4. Diaphragma, hergestellt nach dem Verfahren gemäß einem der Ansprüche 1 bis 3,   d a d u r c h   g e - k e n n z e i c h n e t ,   daß der Bindemittelgehalt etwa zwischen 10 und 30 Gew.-%, vorzugsweise etwa zwischen 15 und 25 Gew.-%, beträgt, bezogen auf Kaliumtitanat.

5. Diaphragma nach Anspruch 4,   d a d u r c h   g e - k e n n z e i c h n e t ,   daß das Bindemittel zu 30 bis 60 Gew.-% aus Polytetrafluoräthylen und zu 40 bis 70 Gew.-% aus Styrol-Butadien-Copolymerem besteht.

6. Diaphragma nach Anspruch 4 oder 5,   d a d u r c h g e k e n n z e i c h n e t ,   daß die Belegungsdichte an Kaliumtitanat etwa zwischen 10 und 30 mg/cm$^2$, vorzugsweise etwa zwischen 15 und 25 mg/cm$^2$, beträgt.